# EUROPÄISCHE PATENTANMELDUNG

(11) **EP 4 386 026 A1**
(43) Veröffentlichungstag der Anmeldung: **19.06.2024**
(21) Anmeldenummer: 23212669.8
(22) Anmeldetag: 28.11.2023
(51) Int. Cl.: C08G 18/10, C08G 18/48, C08G 18/58, C08G 18/76, C08G 18/80, C08G 59/18, C08G 59/40, C08L 63/00, C08L 75/00, E04F 15/00

(54) **POLYURETHAN-EPOXID-BESCHICHTUNGSMATERIAL**

(30) Priorität: 15.12.2022 DE 102022004721
(71) Anmelder: STO SE & Co. KGaA, 79780 Stühlingen (DE)
(72) Erfinder: FUCHS, Berthold, 65207 Wiesbaden (DE); SCHNEIDER, Jan-Pierre, 64521 Groß-Gerau (DE)
(74) Vertreter: Gottschalk, Matthias

(57) **Zusammenfassung**

Die vorliegende Erfindung betrifft eine Zweikomponenten-Beschichtungszusammensetzung mit einer Harzkomponente (A), die als härtbaren Bestandteil mindestens ein härtbares Harz enthält, und einer Härterkomponente (B), die ein Härtungsmittel für das härtbare Harz der Harzkomponente (A) enthält, wobei die Harzkomponente (A) mindestens ein Polyurethan-Präpolymer, mindestens ein Epoxidharz, das OH-Gruppen aufweist, und mindestens ein Verkappungsmittel enthält. Die Zweikomponenten-Beschichtungszusammensetzung ist dadurch gekennzeichnet, dass die NCO-Endstellen des Polyurethan-Präpolymers zum einen Teil an OH-Gruppen des Epoxidharzes und zum anderen Teil an das Verkappungsmittel gebunden sind, und ein weiterer Teil von Epoxidharz frei in der Harzkomponente (A) vorliegt. Die vorliegende Erfindung betrifft ferner Verfahren zur Herstellung einer Harzkomponente (A) der erfindungsgemäßen Zweikomponenten-Beschichtungszusammensetzung, sowie die Verwendung der Zweikomponenten-Beschichtungszusammensetzung als Bodenbeschichtung oder zur Betoninstandsetzung.

## Beschreibung

Die vorliegende Erfindung betrifft eine Zweikomponenten-Beschichtungszusammensetzung mit einer Harzkomponente (A), die als härtbaren Bestandteil mindestens ein härtbares Harz enthält, und einer Härterkomponente (B), die ein Härtungsmittel für das härtbare Harz der Harzkomponente (A) enthält, wobei die Harzkomponente (A) mindestens ein Polyurethan-Präpolymer, mindestens ein Epoxidharz und mindestens ein Verkappungsmittel enthält. Die vorliegende Erfindung betrifft ferner Verfahren zur Herstellung einer Harzkomponente (A) der erfindungsgemäßen Zweikomponenten-Beschichtungszusammensetzung, sowie die Verwendung der Zweikomponenten-Beschichtungszusammensetzung als Bodenbeschichtung oder zur Betoninstandsetzung.

### Hintergrund der Erfindung

Zweikomponenten-Beschichtungszusammensetzungen mit einer Harzkomponente (A), die einen härtbaren Bestandteil auf Basis von Polyurethan-Präpolymeren und Epoxidharzen (Polyurethan-Epoxidharz-Hybride; PEH) enthalten, und einer Härterkomponente (B), die als Härtungsmittel für das härtbare Harz der Harzkomponente (A) beispielsweise ein übliches Aminhärter-System für Raumtemperaturhärtung von Epoxidharzsystemen enthält, sind im Stand der Technik bekannt. In derartigen Zweikomponenten-Beschichtungszusammensetzungen sind die NCO-Endstellen des Polyurethan-Präpolymers mit einem Verkappungsmittel verkappt (verkapptes Polyurethan-Präpolymer), d.h. die NCO-Endstellen des Polyurethan-Präpolymers in der Harzkomponente (A) sind vollständig an ein Verkappungsmittel gebunden. Herkömmliche Verkappungsmittel sind im Stand der Technik bekannt und beinhalten beispielsweise Phenole (z.B. styrolisiertes Phenol, Cashewnussschalenöl (Cardanol als Hauptbestandteil)), sekundäre Amine (z.B. Dicyclohexylamin), Ketoxime (z.B. 2-Butanonoxim) oder Amide (z.B. Caprolactam). In diesen herkömmlichen PEH-Systemen liegen das Epoxidharz und das zuvor verkappte Polyurethan-Präpolymer nebeneinander in der Harzkomponente (A) vor. Die Zweikomponenten-Beschichtungszusammensetzungen aus dem Stand der Technik können beispielsweise als Bodenbeschichtung oder zur Betoninstandsetzung eingesetzt werden, insbesondere als hauptsächlich wirksame Oberflächenschutzschicht für Parkhaussysteme (z.B. OS 8, OS 11a/b oder OS 14 Beschichtungssysteme). Durch Vermischen der Harzkomponente (A) und der Härterkomponente (B) wird eine Aushärtung der Beschichtungszusammensetzung erreicht.

Es gibt jedoch steigende Anforderungen an die resultierende mechanische Stabilität solcher Beschichtungsmaterialien, die herkömmliche PEH-Systeme nicht mehr erfüllen können. In bestehenden PEH-Systemen ist bei der Aushärtung eine Ausbildung von separaten Epoxidharz-Domänen (Hartsegmente) und weichen Polyurethan-Domänen zu beobachten, was die mechanische Stabilität beeinträchtigt. Das Vorliegen von separaten Epoxidharz-Domänen und Polyurethan-Domänen kann beispielsweise durch Bestimmung der Glasübergangstemperatur nachgewiesen werden, wobei sich zwei verschiedene Glasübergangstemperaturen ergeben. Ferner zeigt bei herkömmlichen PEH-Systemen die Entkappungs-/Deblockierungsreaktion des verkappten Polyurethan-Präpolymers während des Aushärtungsprozesses vielfältige Probleme, wie etwa eine verringerte Reaktivität des Polyurethan-Präpolymers, unvollständige Deblockierungen oder eine hohe Konzentration an verbleibendem Verkappungsmittel im Material (Weichmachereffekte), etc., die ebenfalls die mechanische Stabilität der resultierenden Beschichtung beeinträchtigen.

Der vorliegenden Erfindung liegt die Aufgabe zugrunde, die vorstehend beschriebenen Probleme im Zusammenhang mit herkömmlichen PEH-Beschichtungssystemen zu lösen oder abzuschwächen.

### Zusammenfassung der Erfindung

Demgemäß betrifft die vorliegende Erfindung eine Zweikomponenten-Beschichtungszusammensetzung mit einer Harzkomponente (A), die als härtbaren Bestandteil mindestens ein härtbares Harz enthält, und einer Härterkomponente (B), die ein Härtungsmittel für das härtbare Harz der Harzkomponente (A) enthält, wobei
die Harzkomponente (A) mindestens ein Polyurethan-Präpolymer, mindestens ein Epoxidharz, das OH-Gruppen aufweist, und mindestens ein Verkappungsmittel enthält,
*dadurch gekennzeichnet, dass*
die NCO-Endstellen des Polyurethan-Präpolymers zum einen Teil an OH-Gruppen des Epoxidharzes und zum anderen Teil an das Verkappungsmittel gebunden sind, und ein weiterer Teil von Epoxidharz frei in der Harzkomponente (A) vorliegt.

Die Erfindung betrifft ferner die Verwendung der erfindungsgemäßen Zweikomponenten-Beschichtungszusammensetzung als Bodenbeschichtung oder zur Betoninstandsetzung.

Ebenso betrifft die Erfindung ein Verfahren zur Herstellung einer Harzkomponente (A) in der erfindungsgemäßen Zweikomponenten-Beschichtungszusammensetzung, umfassend die Schritte
(I) Vorlegen und Mischen des Polyurethan-Präpolymers, des Verkappungsmittels und zumindest eines Teils des Epoxidharzes, wobei das Epoxidharz OH-Gruppen aufweist, und anschließendes Umsetzen bis zum Verschwinden der Isocyanatbande im Bereich bei 2250 cm-' im IR-Spektrum, und
   anschließend gegebenenfalls Zugeben weiterer Bestandteile;
   oder
(II) Vorlegen und Mischen des Polyurethan-Präpolymers und des Verkappungsmittels, und anschließendes Umsetzen bis eine Veränderung der Isocyanatbande im Bereich bei 2250 cm-' im IR-Spektrum nicht mehr nachzuweisen ist,
   anschließendes Zugeben des Epoxidharzes, wobei das Epoxidharz OH-Gruppen aufweist, und anschließendes Umsetzen bis zum Verschwinden der Isocyanatbande im Bereich bei 2250 cm-' im IR-Spektrum, und
   gegebenenfalls anschließendes Zugeben weiterer Bestandteile;
      oder
(III) Vorlegen und Mischen des Polyurethan-Präpolymers und eines Teils des Epoxidharzes, wobei das Epoxidharz OH-Gruppen aufweist, und anschließendes Umsetzen bis eine Veränderung der Isocyanatbande im Bereich bei 2250 cm-' im IR-Spektrum nicht mehr nachzuweisen ist,
   anschließendes Zugeben des Verkappungsmittels, und Umsetzen bis zum Verschwinden der Isocyanatbande im Bereich bei 2250 cm-' im IR-Spektrum, und
   anschließendes Zugeben des anderen Teils des Epoxidharzes und gegebenenfalls weiterer Bestandteile.

### Kurze Beschreibung der Abbildungen

Abbildung 1 zeigt beispielhaft die Struktur eines Epoxidharzes mit OH-Gruppen, das zur Verwendung in der vorliegenden Erfindung geeignet ist.
Abbildung 2 zeigt illustrativ am Beispiel eines niedermolekularen Reaktivverdünners die Struktur von herstellungsbedingten, OH-Gruppen enthaltenden Nebenprodukten.
Abbildung 3 zeigt beispielhaft die vereinfachte Struktur eines (unverkappten) Polyurethan-Präpolymers.
Abbildung 4 zeigt beispielhaft die vereinfachte Struktur eines erfindungsgemäß verkappten Polyurethan-Präpolymers.

### Detaillierte Beschreibung der Erfindung

Wie vorstehend ausgeführt, betrifft die vorliegende Erfindung in ihrer allgemeinen Form eine Zweikomponenten-Beschichtungszusammensetzung mit einer Harzkomponente (A), die als härtbaren Bestandteil mindestens ein härtbares Harz enthält, und einer Härterkomponente (B), die ein Härtungsmittel für das härtbare Harz der Harzkomponente (A) enthält, wobei die Harzkomponente (A) mindestens ein Polyurethan-Präpolymer, mindestens ein Epoxidharz, das OH-Gruppen aufweist, und mindestens ein Verkappungsmittel enthält, *dadurch gekennzeichnet, dass* die NCO-Endstellen des Polyurethan-Präpolymers zum einen Teil an OH-Gruppen des Epoxidharzes und zum anderen Teil an das Verkappungsmittel gebunden sind, und ein weiterer Teil von Epoxidharz frei in der Harzkomponente (A) vorliegt.

In der Harzkomponente (A) der erfindungsgemäßen Zweikomponenten-Beschichtungszusammensetzung ist mindestens ein Epoxidharz enthalten, das OH-Gruppen aufweist. Wie im Stand der Technik bekannt, sind glycidierte Epoxidharze ein Produkt aus einer Verbindung mit Hydroxy-Gruppen und Epichlorhydrin. Die HydroxyGruppe kann dabei von aliphatischen Diolen, Polyolen, phenolischen Verbindungen oder Dicarbonsäuren stammen. Als Phenole werden üblicherweise Verbindungen wie Bisphenol A, Bisphenol F und Novolake verwendet. Als mehrwertige Alkohole werden Verbindungen wie 1,4-Butandiol eingesetzt. Di- und Polyole führen zu Diglycidyl-Polyethern. Erfindungsgemäß geeignete Epoxidharze sind ein Produkt aus einem mindestens difunktionellen Alkohol (z.B. Bisphenol A, Bisphenol F, Trimethylolpropan, etc.) und Epichlorhydrin, wobei Glycidylether-Funktionen resultieren. Prozessbedingt fallen bei der Herstellung von Epoxidharzen Nebenprodukte an, die weiterhin OH-Gruppen enthalten. Die Mechanismen zur Bildung dieser Nebenprodukte sind dem Fachmann bekannt.

Abbildung 1 zeigt beispielhaft die Struktur eines Diglycidylethers von Bisphenol A (DGEBA), wobei bei einem Polymerisationsgrad von n≠0 OH-Gruppen enthalten sind. Derartige Epoxidharze, die OH-Gruppen enthalten, fallen bei der Herstellung als Nebenprodukt prozessbedingt an. Es ist ein wesentliches Merkmal der vorliegenden Erfindung, dass in der Harzkomponente (A) mindestens ein Epoxidharz enthalten ist, das auch unaufgereinigtes Nebenprodukt mit OH-Gruppen enthält.

Der Begriff "*Polymerisationsgrad n*" in Sinne der vorliegenden Erfindung ist z.B. in Abbildung 1 am Beispiel eines Diglycidylethers von Bisphenol A (DGEBA) näher veranschaulicht. Bei der Umsetzung von Diolen mit Epichlorhydrin zur Herstellung von Epoxidharzen ergeben sich herstellungsbedingt unter Öffnung eines Epoxidrings auch dimerisierte oder höherwertige Produkte der allgemeinen Formel GE-[DOCH₂(COH)CH₂]ₙ-DO-GE, wobei GE eine Gylcidylether-Einheit und DO die Grundstruktur des Diols bezeichnet. Der Index n in der vorstehenden allgemeinen Formel wird in der vorliegenden Erfindung als Polymerisationsgrad n bezeichnet. Der Begriff "*mittlerer Polymerisationsgrad n"* meint gemäß der Erfindung die Summe von n über alle vorhandenen Moleküle geteilt durch die Gesamtzahl der einzelnen Moleküle.

Abbildung 2 zeigt beispielhaft die Struktur des niedermolekularen Reaktivverdünners Trimethylolpropantriglycidylether (TMPTG). TMPTG kann herstellungsbedingte Nebenprodukte enthalten (wie etwa Trimethylolpropandiglycidylether und Trimethylolpropanmonoglycidylether), die ggf. weitere OH-Gruppen aufweisen.

Erfindungsgemäß werden Epoxidharze, z.B. handelsübliche Epoxidharze, eingesetzt, vorausgesetzt dass mindestens ein Epoxidharz enthalten ist, das auch OH-Gruppen enthält. In eine bevorzugten Ausführungsform der Erfindung können als Epoxidharz, das auch OH-Gruppen enthält, beispielsweise Diglycidylether von Bisphenol A bzw. F (DGEBA, DGEBF) mit einem mittleren Polymerisationsgrad von n≠0 (siehe Abb. 1 beispielhaft für DGEBA), oder stärker bevorzugt flüssige, niedermolekulare Varianten (liquid epoxy resin (LER)), die einen mittleren Polymerisationsgrad n von 0,1<n≤1 aufweisen).

In einer bevorzugten Ausführungsform wird gemäß der Erfindung in der Harzkomponente (A) als Epoxidharz, das OH-Gruppen aufweist, ein Diglycidylether von Bisphenol A (DGEBA) verwendet. In einer stärker bevorzugten Ausführungsform weist der Diglycidylether von Bisphenol A eine Molekülkonzentration mit einem Polymerisationsgrad n = 1 von 5 bis 15% (d.h. mol%) und mit einem Polymerisationsgrad n ≥ 2 von <3% auf, noch stärker bevorzugt eine Molekülkonzentration mit einem Polymerisationsgrad n = 1 von 8 bis 13% und einem Polymerisationsgrad n ≥ 2 von <2%. Alternativ oder zusätzlich können erfindungsgemäß stärker bevorzugte Diglycidylether von Bisphenol A charakterisiert werden durch ein Epoxidäquivalenzgewicht von 160 bis 220 eq/g, noch stärker bevorzugt ein Epoxidäquivalenzgewicht von 170 bis 200 eq/g. Alternativ oder zusätzlich können erfindungsgemäß stärker bevorzugte Diglycidylether von Bisphenol A charakterisiert werden durch eine dynamische Viskosität bei 25°C nach EN ISO 3219 von 5 bis 20 Pas, noch stärker bevorzugt eine dynamische Viskosität von 8 bis 16 Pas. Das Epoxidäquivalenzgewicht bzw. die dynamische Viskosität der DGEBA-Zusammensetzung erlaubt Rückschlüsse auf den Polymerisationsgrad n und damit indirekt auf die Menge bzw. Konzentration an OH-Gruppen in der Zusammensetzung. Es wurde gefunden, dass Diglycidylether von Bisphenol A mit Epoxidäquivalenzgewichten oder dynamischen Viskositäten in den vorstehend genannten Bereichen erfindungsgemäß als das OH-funktionelle Epoxidharz besonders geeignet sind.

Erfindungsgemäß ist ein Teil des in der Harzkomponente (A) vorliegenden mindestens einen OH-funktionellen Epoxidharzes über OH-Gruppen an NCO-Endstellen des Polyurethan-Präpolymers gebunden, während ein weiterer Teil von Epoxidharz frei in der Harzkomponente (A) vorliegt.

Die Zweikomponenten-Beschichtungszusammensetzung der vorliegenden Erfindung ist dadurch gekennzeichnet, dass die NCO-Endstellen des Polyurethan-Präpolymers zum einen Teil an OH-Gruppen des Epoxidharzes und zum anderen Teil an das Verkappungsmittel gebunden sind.

Der Begriff "*Polyurethan-Präpolymer*" (PU-Präpolymer) bezeichnet erfindungsgemäß wie im Stand der Technik üblich ein Produkt aus einer PolyolKomponente (mehrfunktioneller Alkohol), bevorzugt auf Polymerbasis, oder Mischungen aus mehreren Polyol-Komponenten und einem Polyisocyanat (mehrfunktionelles Isocyanat) oder Mischungen aus mehreren Polyisocyanaten. Die Hydroxyl-Gruppen des Polyols werden an die Isocyanatgruppen des Polyisocyanats addiert. Die Isocyanat-Gruppen werden hierbei stöchiometrisch im Überschuss (Isocyanatequivalent zu OH-Äquivalent mind. 1,1:1eq) eingesetzt, wodurch freie, endständige Isocyanat-Gruppen im PU-Präpolymer verbleiben.

Eine allgemeine, vereinfachte Struktur eines PU-Präpolymers ist beispielhaft in Abbildung 3 veranschaulicht. Die Bindung der Reste R₁ und R₂ zur anliegenden allgemeinen Struktur ist fett gezeichnet und die Basis der entsprechenden Komponente in Klammern genannt. R₁ beschreibt die Polyisocyanatstruktur und R₂ die Polyolstruktur. In Abbildung 3 ist die Struktur vereinfacht linear gezeigt, durch Verwendung von Polyolen mit Hydroxylfunktionalitäten >2 bzw. Polyisocyanaten mit Isocyanatfunktionalitäten >2 können jedoch auch Verzweigungen resultieren.

Erfindungsgemäß geeignete Polyurethan-Präpolymere sind nicht besonders beschränkt. Vielmehr können handelsübliche PU-Präpolymere eingesetzt werden. Beispielsweise können PU-Präpolymere verwendet werden auf Polyol-Basis von Polyalkylenglykolen wie z.B. Polypropylenglykol, Polyethylenglykol oder Polytetrahydrofuran sowie hydroxylterminierte Polybutadiene.

In einer bevorzugten Ausführungsform liegen die Molekularmassen der verwendeten Polyole zwischen 500 bis 4000 g/mol. In einer anderen bevorzugten Ausführungsform sind die verwendeten Polyisocyanate beispielsweise Toluoldiisocyanat (TDI), Methylendiphenylisocyanat (MDI), Hexamethylendiisocyanat (HDI) oder Isophorondiisocyanat (IPDI). Ebenso können von den Polyol- sowie Polyisocyanattypen auch Mischungen derer verwendet werden.

In einer bevorzugten Ausführungsform werden Polypropylenglykole von TDI oder MDI mit einem Molekulargewicht von 500 bis 3000 g/mol. In einer stärker bevorzugten Ausführungsform werden Polypropylenglykole von TDI mit Molekulargewichten von 1000 bis 2500 g/mol eingesetzt.

In einer Ausführungsform haben die einsetzbaren PU-Präpolymere eine Molekularmasse zwischen 500 und 10.000 g/mol, vorzugsweise zwischen 1000 und 8000 g/mol, stärker bevorzugt zwischen 1500 und 6000 g/mol. Die Molekularmasse kann wie im Stand der Technik üblich via GPC und Kalibrierung über Polystyrol-Standards bestimmt werden, soweit sie nicht bereits vom Hersteller angegeben wird.

In einer Ausführungsform haben die einsetzbaren PU-Präpolymere einen viskosen aber flüssigen Charakter, d.h. dynamische Viskositäten bei 25°C nach EN ISO 3219 im Bereich ≤100.000 mPas, bevorzugt ≤30.000 mPas, mit geringer Kristallisationsneigung. In einer weiteren Ausführungsform haben die einsetzbaren PU-Präpolymere einen niedrigen Glasübergang T_{g} von <0°C, bevorzugt <-20°C. Die Glasübergangstemperatur T_{g} kann nach DIN EN 12614 über DSC bestimmt werden, soweit sie nicht bereits vom Hersteller angegeben wird. In einer weiteren Ausführungsform haben die einsetzbaren PU-Präpolymere Funktionalitäten im Bereich von >1,5 eq/Molekül, bevorzugt ≥2,0 eq/Molekül bis ≤4 eq/Molekül. Die Funktionalitäten der PU-Präpolymere können anhand der Molekulargewichte (GPC) und der NCO-Konzentration (gegeben) berechnet werden.

Erfindungsgemäß einsetzbare Verkappungsmittel sind im Stand der Technik hinlänglich bekannt. Beispielsweise können als Verkappungsmittel Phenole, wie etwa styrolisiertes Phenol, Cashewnussschalenöl (mit Cardanol als Hauptbestandteil), sekundäre Amine (z.B. Dicyclohexylamin), Ketoxime (z.B. 2-Butanonoxim) oder Amide (z.B. Caprolactam) verwendet werden. Bevorzugt werden Verkappungsmittel mit phenolischen Gruppen, wie beispielsweise Cashewnussschalenöl.

Die NCO-Endstellen des in der Harzkomponente (A) der erfindungsgemäßen Zweikomponenten-Beschichtungszusammensetzung enthaltenen Polyurethan-Präpolymers sind zum einen Teil an OH-Gruppen des Epoxidharzes und zum anderen Teil an das Verkappungsmittel gebunden, so dass ein vollständig verkapptes PU-Präpolymer resultiert. Die vereinfachte Struktur eines erfindungsgemäß verkappten Polyurethan-Präpolymers ist beispielhaft in Abbildung 4 gezeigt. Die Bindung der Reste R₁, R₂ und X zur anliegenden allgemeinen Struktur ist in Abbildung 4 fett gezeichnet und die Basis der entsprechenden Komponenten in Klammern benannt. R₁ beschreibt die Polyisocyanatstruktur, R₂ die Polyolstruktur und X entweder das OH-funktionelle Epoxidharz bzw. das Verkappungsmittel. In der Abbildung ist die Struktur vereinfacht linear gezeigt, durch Verwendung von Polyolen mit Hydroxylfunktionalitäten >2 bzw. Polyisocyanaten mit Isocyanatfunktionalitäten >2 können jedoch auch Verzweigungen resultieren.

In einer Ausführungsform der Erfindung sind 10%-75% der NCO-Endstellen des in der Harzkomponente (A) enthaltenen Polyurethan-Präpolymers, basierend auf den Gesamtzahlen der NCO-Endstellen im Polyurethan-Präpolymer, an OH-Gruppen im Epoxidharz gebunden und der Rest (25%-90%) der NCO-Endstellen des Polyurethan-Präpolymers sind an das Verkappungsmittel gebunden. In einer bevorzugten Ausführungsform sind 20%-50% der NCO-Endstellen des Polyurethan-Präpolymers an OH-Gruppen im Epoxidharz gebunden und der Rest (50%-80%) der NCO-Endstellen des Polyurethan-Präpolymers sind an das Verkappungsmittel gebunden.

In einer Ausführungsform umfasst die Harzkomponente (A) der erfindungsgemäßen Zweikomponenten-Beschichtungszusammensetzung 25-70 Gew.-% an Polyurethan-Präpolymer, 2-40 Gew.-% an Epoxidharz und 1-20 Gew.-% an Verkappungsmittel, jeweils bezogen auf das Gesamtgewicht der Harzkomponente (A). Das Gewichtsverhältnis von Polyurethan-Präpolymer zu Epoxidharz in der Harzkomponente (A) ist in einer Ausführungsform ≥1, vorzugsweise >1,2. In einer bevorzugten Ausführungsform umfasst die Harzkomponente (A) 30-65 Gew.-%, stärker bevorzugt 35-60 Gew.-% an Polyurethan-Präpolymer, 4-35 Gew.-%, stärker bevorzugt 6-30 Gew.-% an Epoxidharz, und 2-15 Gew.-%, stärker bevorzugt 3-10 Gew.-% an Verkappungsmittel, jeweils bezogen auf das Gesamtgewicht der Harzkomponente (A).

Die Harzkomponente (A) der erfindungsgemäßen Zweikomponenten-Beschichtungszusammensetzung kann weitere, prinzipiell im Stand der Technik bekannte Bestandteile, enthalten. Diese umfassen, sind aber nicht beschränkt auf einen oder mehrere Katalysatoren für die Verkappungs-/Entkappungsreaktion, ein oder mehrere weitere Epoxidharze, einen oder mehrere Reaktivverdünner, einen oder mehrere Weichmacher, einen oder mehrere Füllstoffe, ein oder mehrere Pigmente sowie gegebenenfalls weitere übliche Additive enthält.

Geeignete Katalysatoren für die Verkappungs-/Entkappungsreaktion sind im Stand der Technik bekannt. Die chemische Umsetzung eines Polyurethan-Präpolymers zu einem vollständig verkappten Polyurethan-Präpolymer, wobei die NCO-Endstellen des Polyurethan-Präpolymers zum einen Teil an OH-Gruppen des Epoxidharzes und zum anderen Teil an das Verkappungsmittel gebunden sind, wird weiter nachstehend näher beschrieben. Illustrative Beispiele für Katalysatoren für die Verkappungs-/Entkappungsreaktion umfassen, sind aber nicht beschränkt auf organische Metallsalze (Lewis-Säuren) oder tertiäre Amine. Mögliche tertiäre Amine beinhalten z.B. 1,4-Diazabicyclo[2.2.2]octan. Ferner geeignet sind Metallionen (z.B. Zinn, Zink, Bismuth, Zirkonium) und zugehörige organische Reste (z.B. Acetylacetonat, Octat, Laurat). Bevorzugt sind Zinn-freie Katalysatoren, besonders bevorzugt Mischungen auf Basis von Zink und Bismuth.

Zusätzlich kann ein weiteres, im Stand der Technik grundsätzlich bekanntes Epoxidharz eingesetzt werden. Als weiteres Epoxidharz können beispielsweise die vorstehend genannten verwendet werden, wobei es bei der Verwendung als zusätzliches Epoxidharz nicht erforderlich ist, dass darin funktionelle OH-Gruppen vorhanden sind. Das heißt, dass erfindungsgemäß auch Gemische von verschiedenen Epoxidharzen eingesetzt werden können, unter der Voraussetzung, dass zur (teilweisen) Verkappung des PU-Präpolymers mindestens ein Epoxidharz, das funktionelle OH-Gruppen aufweist, vorhanden sein muss.

Zusätzlich können erfindungsgemäß ferner epoxidfunktionelle Reaktivverdünner (z.B. Abbildung 2) eingesetzt werden, wobei auch hier ein gewisser Anteil an OH-Gruppen enthaltenden Nebenprodukten vorhanden sein kann. Geeignete Reaktivverdünner sind im Stand der Technik ebenfalls bekannt. Illustrative Beispiele umfassen, sind aber nicht beschränkt auf glycidylfunktionalisierte Alkohole, wie z.B. C₁₂-C₁₄ aliphatische Glycidylether oder Diglycidylether von Butandiol, Hexandiol, Neopentylglykol, Polypropylenglykol. Ferner eignet sich zusätzlich Propylencarbonat als ergänzender Reaktivverdünner zu den glycidylfunktionalisierten Alkoholen.

Auch geeignete Weichmacher sind im Stand der Technik bekannt. Illustrative Beispiele umfassen, sind aber nicht beschränkt auf beispielsweise Phthalsäureester, Phosphate, acyclische Ester, Oxicarbonsäureester, Trimellithate. Bevorzugt werden Phthalsäureester und acyclische Ester eingesetzt. Besonders bevorzugt sind Adipate wie z.B. Dioctyladipate.

Geeignete Füllstoffe sind im Stand der Technik bekannt. Illustrative Beispiele davon umfassen, sind aber nicht beschränkt auf z.B. Silikate (Kieselsäuren, Quarz, Talk, Feldspat, etc.), Carbonate (Calciumcarbonat, Dolomit, Magnesiumcarbonat, etc.), Sulfate (Bariumsulfat, Calciumsulfat, etc.) oder auch Aluminiumoxide/-hydroxide.

Ferner können weitere dem Fachmann bekannten Additive gemäß der Erfindung eingesetzt werden. Illustrative Beispiele umfassen, sind aber nicht beschränkt auf beispielsweise wie Additive zur Entlüftung bzw. Entschäumung (z.B. organische Flüssigkeiten - Siloxane, Acrylate, etc.), Mittel zur Oberflächenmodifizierung (Mattierung, Gleitfähigkeit, Kratzfestigkeit - z.B. Silikone, Wachse, Kieselsäuren), Mittel zur Verlaufsmodifizierung (z.B. Polymere - Acrylate, Silikone, Tenside, Lösemittel), Mittel zur Dispergier-/Benetzungsmodifizierung (Dispergierhilfe, Stabilisierung, Pigmentbenetzung, z.B. Polymere (Acrylpolymere, Polyurethane, etc.) oder Tenside), Verdickungsmittel (z.B. anorganische Verdicker, wie Silikate), Haftvermittlungsmittel (z.B. organofunktionelle Silane), Lichtschutzmittel, Flammschutzmittel, Antistatika, Hautverhinderungsmittel, Korrosionsinhibitoren oder Stabilisatoren für das verkappte PU-Präpolymer, etc.

In einer Ausführungsform umfasst die Harzkomponente (A) der Zweikomponenten-Beschichtungszusammensetzung der Erfindung 0-0,4 Gew.-% an Katalysator für die Verkappungs-/Entkappungsreaktion, 0-20 Gew.-% an Reaktivverdünner, 0-15 Gew.-% an Weichmacher, 0-40 Gew.-% an Füllstoffen, 0-4 Gew.-% an Pigmenten und/oder 0-5 Gew.-% an weiteren Additiven, jeweils bezogen auf das Gesamtgewicht der Harzkomponente (A). In einer bevorzugten Ausführungsform umfasst die Harzkomponente (A) 0,1-0,3 Gew.-% an Katalysator für die Verkappungs-/Entkappungsreaktion, 5-15 Gew.-% an Reaktivverdünner, 3-10 Gew.-% an Weichmacher, und/oder 10-35 Gew.-%, bevorzugt 15-25 Gew.-% an Füllstoffen, jeweils bezogen auf das Gesamtgewicht der Harzkomponente (A).

Die Härterkomponente (B) der erfindungsgemäßen Zweikomponenten-Beschichtungszusammensetzung umfasst ein Härtungsmittel für das härtbare Harz der Harzkomponente (A). Beispielsweise kann als Härtungsmittel ein im Stand der Technik übliches Aminhärter-System eingesetzt werden. Illustrative Beispiele umfassen, sind aber nicht beschränkt auf aliphatische bzw. cycloaliphatische Amine, wie zum Beispiel Diethylentriamin, 4,4'-Methylenbis(cyclohexylamin), Isophorondiamin oder Isophorondiamin-Addukt (an Epoxidharz DGEBA), und Polyetheramine. Die Härterkomponente (B) kann gegebenenfalls auch weitere, im Stand der Technik bekannte Bestandteile enthalten, wie z.B. styrolisierte Phenole, Tris(dimethylaminomethyl)phenol oder Benzylalkohol.

In der Zweikomponenten-Beschichtungszusammensetzung gemäß der vorliegenden Erfindung sind die Harzkomponente (A) und die Härterkomponente (B) in voneinander getrennten Behältnissen angeordnet. Das Gewichtsverhältnis des Gesamtgewichts der Harzkomponente (A) zu dem Gesamtgewicht der Härterkomponente (B) ist dabei von den jeweiligen Konzentrationen der reaktiven Bestandteile abhängig. Beispielsweise hängt das Gewichtsverhältnis des Gesamtgewichts der Harzkomponente (A) zu dem Gesamtgewicht der Härterkomponente (B) vom gewählten Härtersystem in Komponente (B) (z.B. Aminkonzentration, etc.), Amine im Härtersystem (B) können stöchiometrisch zum Epoxidharz und verkappten PU-Präpolymer eingesetzt werden, oder Amine werden über- und unterstöchiometrisch (90-130%) eingesetzt. In einer Ausführungsform beträgt das Gewichtsverhältnis des Gesamtgewichts der Harzkomponente (A) zu dem Gesamtgewicht der Härterkomponente (B) 100:10 bis 100:60 beträgt, vorzugsweise 100:15 bis 100:40.

Die vorliegende Erfindung betrifft auch die Verwendung der vorstehend beschriebenen Zweikomponenten-Beschichtungszusammensetzung als Bodenbeschichtung oder zur Betoninstandsetzung. Die Erfindung kann in allen Bodenbeschichtungen (z.B. Industrieböden) und Betoninstandsetzungen (z.B. Oberflächenschutz im Parkhaus) eingesetzt werden. Die Zweikomponenten-Beschichtungszusammensetzung der Erfindung kann auch in Verwendungen, bei denen leicht elastifizierte bis hin zu rissüberbrückenden Beschichtungen gewünscht bzw. erforderlich sind, eingesetzt werden, beispielsweise als hauptsächlich wirksamer Oberflächenschutz in Parkhaussystemen.

Wie vorstehend ausgeführt unterscheidet sich die Zweikomponenten-Beschichtungszusammensetzung der vorliegenden Erfindung vom Stand der Technik im Wesentlichen dadurch, dass die NCO-Endstellen der Polyurethan-Präpolymers in der Harzkomponente (A) sowohl zu einem Teil an OH-Gruppen des Epoxidharzes als auch zum anderen Teil an das Verkappungsmittel gebunden sind. Die vorliegende Erfindung betrifft daher auch ein Verfahren zur Herstellung einer Harzkomponente (A) in der erfindungsgemäßen Zweikomponenten-Beschichtungszusammensetzung. Gemäß der Erfindung kann die Herstellung eines sowohl mit Verkappungsmittel als auch OH-Gruppen enthaltendem Epoxidharz verkappten Polyurethan-Präpolymers in einem einstufigen Verfahren oder einem zweistufigen Verfahren durchgeführt werden.

In einer Ausführungsform wird das sowohl mit Verkappungsmittel als auch OH-Gruppen enthaltendem Epoxidharz verkappte Polyurethan-Präpolymer in einem einstufigen Verfahren hergestellt. Demgemäß betrifft die vorliegende Erfindung auch ein Verfahren zur Herstellung einer Harzkomponente (A) in der erfindungsgemäßen Zweikomponenten-Beschichtungszusammensetzung, umfassend die Schritte: Vorlegen und Mischen des Polyurethan-Präpolymers, des Verkappungsmittels und zumindest eines Teils des Epoxidharzes, wobei das Epoxidharz OH-Gruppen aufweist, und anschließendes Umsetzen bis zum Verschwinden der Isocyanatbande im Bereich bei ca. 2250 cm⁻¹ im IR-Spektrum, sowie anschließend gegebenenfalls Zugeben weiterer Bestandteile.

Gemäß dieser Ausführungsform wird das Polyurethan-Präpolymer mit dem Verkappungsmittel und dem Epoxidharz, das OH-Gruppen enthält, oder zumindest einem Teil des Epoxidharzes, das OH-Gruppen enthält, vorgelegt und gemischt. Insbesondere falls die anschließende Umsetzung bei Raumtemperatur erfolgt kann bereits auf dieser Stufe Weichmacher zugegeben werden bzw. wird bevorzugt zugegeben, um die Verarbeitbarkeit zu verbessern. Ferner wird dem Gemisch üblicherweise ein Katalysator für die Verkappungsreaktion zugegeben. Anschließend wird das Gemisch zur Umsetzung bis zum vollständigen Verschwinden der Isocyanatbande im IR-Spektrum bei Raumtemperatur oder erhöhter Temperatur gerührt. Der Anteil der NCO-Endstellen im Polyurethan-Präpolymer, der durch Verkappungsmittel bzw. OH-Gruppen des Epoxidharzes verkappt ist, wird dabei durch geeignete Wahl der Mengen (bezogen auf die der NCO-Endstellen des Polyurethan-Präpolymers) an Verkappungsmittel bzw. Epoxidharz (unter Berücksichtigung des Anteils der OH-Gruppen im jeweiligen Epoxidharz) eingestellt. Die Menge an NCO-Endstellen im eingesetzten PU-Präpolymer ist ebenso wie die Menge an Verkappungsmittel bekannt. Der Anteil der OH-Gruppen im eingesetzten Epoxidharz kann gemäß der hierin beschriebenen Methoden (beispielsweise durch bestimmen des Polymerisationsgrades n) bestimmt bzw. berechnet werden. Die Summe aus Verkappungsmittel und OH-funktionellem Epoxidharz kann hierbei stöchiometrisch oder überstöchiometrisch in Bezug auf die NCO-Endstellen im PU-Präpolymer sein. In einer bevorzugten Ausführungsform wird das Verkappungsmittel bzw. OH-funktionelle Epoxidharz im Überschuss eingesetzt, um eine schnellere Reaktion (bei Raumtemperatur) und eine verarbeitbare Viskosität zu gewährleisten. Die Vollständigkeit der Verkappungsreaktion wird gemäß der in der vorliegenden Beschreibung ausgeführten Methoden ("*Reaktionsverfolgung"*) überprüft. Gegebenenfalls kann Verkappungsmittel und/oder OH-funktionelles Epoxidharz nachdosiert werden, bis die NCO-Bande im IR-Spektrum verschwunden ist. Nach vollständiger Umsetzung können gegebenenfalls der restliche Teil des Epoxidharzes bzw. andere Epoxidharze sowie weitere optionale Bestandteile, wie beispielsweise Reaktivverdünner, Füllstoffe, Pigmente oder weitere Additive, wie vorstehend beschrieben, zugegeben werden, um eine Harzkomponente (A) zu erhalten, die für die Zweikomponenten-Beschichtungszusammensetzung der vorliegenden Erfindung geeignet ist.

In einer anderen Ausführungsform wird das sowohl mit Verkappungsmittel als auch OH-Gruppen enthaltendem Epoxidharz verkappte Polyurethan-Präpolymer in einem zweistufigen Verfahren hergestellt. Es ist möglich das Polyurethan-Präpolymer zunächst mit dem Verkappungsmittel partiell zu verkappen und anschließend mit Epoxidharz, das OH-Gruppen enthält, vollständig zu verkappen. Alternativ kann das Polyurethan-Präpolymer zunächst mit Epoxidharz, das OH-Gruppen enthält, partiell verkappt und anschließend in einem zweiten Reaktionsschritt mit Verkappungsmittel vollständig verkappt werden.

Demgemäß betrifft die vorliegende Erfindung in einer Ausführungsform auch ein Verfahren zur Herstellung einer Harzkomponente (A) in der erfindungsgemäßen Zweikomponenten-Beschichtungszusammensetzung, umfassend einen ersten Schritt des Vorlegens und Mischens des Polyurethan-Präpolymers und des Verkappungsmittels, und anschließendes Umsetzen. Die Umsetzung im ersten Schritt erfolgt bis der gewünschte NCO-Gehalt (Bestimmung nach DIN EN ISO 11 909) erreicht ist. Die Menge an Verkappungsmittel wird dabei (unterstöchiometrisch) in Abhängigkeit des ursprünglichen NCO-Gehalts (bekannt) im PU-Präpolymer sowie des gewünschten Verhältnisses von Verkappungsmittel/OH-funktionellem Epoxidharz im vollständig verkappten (Schritt 2) PU-Präpolymer gewählt. Die Vollständigkeit der Teilverkappungs-Reaktion des PU-Präpolymers mit Verkappungsmittel ist gemäß der in der vorliegenden Beschreibung ausgeführten Reaktionsverfolgung beispielsweise daran erkennbar, dass eine Veränderung der Isocyanatbande im Bereich bei ca. 2250 cm⁻¹ im IR-Spektrum nicht mehr nachzuweisen ist. Alternativ kann in diesem Verfahrensschritt der im mit Verkappungsmittel (teil)verkappten Zwischenprodukt vorliegende Restgehalt an NCO-Gruppen gemäß DIN EN ISO 11 909 bestimmt werden, und auf diese Weise festgestellt werden inwieweit der gewünschte NCO-Gehalt (der die Vollständigkeit der Teilverkappungs-Reaktion in diesem Verfahrensschritt anzeigt) erreicht ist. Anschließend wird in einem zweiten Schritt Epoxidharz zugegeben, wobei das Epoxidharz OH-Gruppen aufweist, und anschließend wird umgesetzt bis zum (vollständigen) Verschwinden der Isocyanatbande im Bereich bei ca. 2250 cm⁻¹ im IR-Spektrum. Danach können ggf. weitere Bestandteile zugegeben werden.

Gemäß der vorstehenden Ausführungsform wird das Polyurethan-Präpolymer mit dem Verkappungsmittel vorgelegt und gemischt. Die Menge des Verkappungsmittels wird dabei so gewählt, dass ein Teil der NCO-Endstellen des Polyurethan-Präpolymers frei bleibt (unterstöchiometrisch). Auch gemäß dieser Ausführungsform kann bereits auf dieser Stufe Weichmacher zugegeben werden, insbesondere falls die anschließende Umsetzung bei Raumtemperatur erfolgt, um die Verarbeitbarkeit zu verbessern. Ferner wird dem Gemisch üblicherweise ein Katalysator für die Verkappungsreaktion zugegeben. Anschließend wird das Gemisch zur Umsetzung bei Raumtemperatur oder erhöhter Temperatur gerührt bis eine Veränderung der Isocyanatbande im IR-Spektrum im Bereich bei ca. 2250 cm-' nicht mehr nachzuweisen ist, oder es wird, wie vorstehend ausgeführt, gemäß DIN EN ISO 11 909 geprüft, ob der gewünschte Restgehalt an NCO-Gruppen erreicht ist.

In einem zweiten Verfahrensschritt dieser Ausführungsform wird anschließend Epoxidharz, das OH-Gruppen aufweist, zugegeben. Da gemäß dieser Ausführungsform ein Teil der NCO-Endstellen des Polyurethan-Präpolymers bereits durch das Verkappungsmittel partiell verkappt ist, kann die Menge an Epoxidharz, das OH-Gruppen enthält, beliebig gewählt werden, d.h. gegebenenfalls auch überstöchiometrisch eingesetzt werden. Anschließend wird das Gemisch bei Raumtemperatur oder erhöhter Temperatur gerührt und umgesetzt, bis zum vollständigen Verschwinden der Isocyanatbande im IR-Spektrum. Nach vollständiger Umsetzung können gegebenenfalls weitere optionale Bestandteile, wie beispielsweise weitere bzw. andere Epoxidharze, Reaktivverdünner, Füllstoffe, Pigmente oder weitere Additive, wie vorstehend beschrieben, zugegeben werden, um eine Harzkomponente (A) zu erhalten, die für die Zweikomponenten-Beschichtungszusammensetzung der vorliegenden Erfindung geeignet ist.

In einer weiteren Ausführungsform betrifft die vorliegende Erfindung auch ein Verfahren zur Herstellung einer Harzkomponente (A) in der erfindungsgemäßen Zweikomponenten-Beschichtungszusammensetzung, umfassend einen ersten Schritt des Vorlegens und Mischens des Polyurethan-Präpolymers und eines Teils des Epoxidharzes, das OH-Gruppen aufweist, und anschließendes Umsetzen bis eine Veränderung der Isocyanatbande im Bereich bei ca. 2250 cm⁻¹ im IR-Spektrum nicht mehr nachzuweisen ist, und einen zweiten Schritt des anschließenden Zugeben des Verkappungsmittels, und anschließendes Umsetzen bis zum (vollständigen) Verschwinden der Isocyanatbande im Bereich bei ca. 2250 cm-' im IR-Spektrum, sowie gegebenenfalls anschließendes Zugeben weiterer Bestandteile. Die Verfolgung der Teilverkappungsreaktion (Schritt 1) und Endverkappungsreaktion (Schritt 2) kann wie in den vorstehend beschriebenen Verfahrensvarianten gemäß der in der vorliegenden Beschreibung ausgefahren Reaktionsverfolgung durchgeführt werden.

Gemäß letzterer Ausführungsform wird das Polyurethan-Präpolymer mit einem Teil des Epoxidharzes, das OH-Gruppen aufweist, vorgelegt und gemischt. Die Menge des Epoxidharzes wird dabei, bezogen auf die OH-Gruppen im Epoxidharz, so gewählt, dass ein Teil der NCO-Endstellen des Polyurethan-Präpolymers frei bleibt (unterstöchiometrisch). Auch gemäß dieser Ausführungsform kann bereits auf dieser Stufe Weichmacher zugegeben werden, insbesondere falls die anschließende Umsetzung bei Raumtemperatur erfolgt, um die Verarbeitbarkeit zu verbessern. Ferner wird dem Gemisch üblicherweise ein Katalysator für die Verkappungsreaktion zugegeben. Anschließend wird das Gemisch zur Umsetzung bei Raumtemperatur oder erhöhter Temperatur gerührt bis eine Veränderung der Isocyanatbande im Bereich bei ca. 2250 cm-' im IR-Spektrum nicht mehr nachzuweisen ist. Genaueres hierzu ist weiter nachstehend im Abschnitt "*Reaktionsverfolgung"* ausgeführt.

In einem zweiten Verfahrensschritt dieser Ausführungsform wird anschließend das Verkappungsmittel zugegeben. Die Menge an Verkappungsmittel wird dabei im Hinblick auf den Anteil der NCO-Endstellen im Polyurethan-Präpolymer, die noch nicht verkappt sind, gewählt und kann stöchiometrisch oder überstöchiometrisch gewählt werden. Anschließend wird das Gemisch bei Raumtemperatur oder erhöhter Temperatur gerührt und umgesetzt, bis zum (vollständigen) Verschwinden der Isocyanatbande im Bereich bei ca. 2250 cm-' im IR-Spektrum. Nach vollständiger Umsetzung können der restliche Teil des OH-funktionellen Epoxidharzes bzw. andere Epoxidharze und gegebenenfalls weitere optionale Bestandteile, wie beispielsweise Reaktivverdünner, Füllstoffe, Pigmente oder weitere Additive, wie vorstehend beschrieben, zugegeben werden, um eine Harzkomponente (A) zu erhalten, die für die Zweikomponenten-Beschichtungszusammensetzung der vorliegenden Erfindung geeignet ist.

Gemäß der vorliegenden Erfindung kann eine Zweikomponenten-Beschichtungszusammensetzung bereitgestellt werden, die die im Stand der Technik nachteilhafte Ausbildung von Epoxidharz-Domänen und Polyurethan-Domänen vermeidet bzw. abschwächt.

Ferner ist die erfindungsgemäß gebildete Bindung der OH-Gruppen des Epoxidharzes an NCO-Gruppen des PU-Präpolymers unter den am Anwendungsort typischerweise vorgefundenen Härtungstemperaturen (beispielsweise im Bereich von etwa 8°C bis etwa 40°C) irreversibel - im Gegensatz zu der herkömmlichen Blockierung von PU-Präpolymer über ausschließlich Verkappungsmittel. Daher wird gemäß der Erfindung im Härtungsprozess mit üblichen raumtemperaturhärtenden Aminsystemen weniger Verkappungsmittel frei bzw. kinetisch ungünstige Deblockierungen sind nicht notwendig. Aus diesem Grund können gemäß der vorliegenden Erfindung ferner die im Stand der Technik nachteilhaften Probleme bei der Endkappungs-/Deblockierungsreaktion während des Aushärtungsprozesses verhindert bzw. vermindert werden, und die im Beschichtungsmaterial verbleibende Konzentration an Verkappungsmittel kann vermindert werden.

Weitere Vorteile der Erfindung beinhalten:
o Die Zweikomponenten-Beschichtungszusammensetzung kann arm an flüchtigen organischen Verbindungen (VOC) bzw. frei von Lösungsmittel sein;
o Die Lagerstabilität der Harzkomponente (A) ist verbessert, so dass kein bzw. weniger Stabilisator notwendig ist;
o Es ist eine schnellere und vollständigere Aushärtung bei Raumtemperatur möglich;
o Die Notwendigkeit einer gesundheitsgefährdenden Mannich-Base in der Härterkomponente (B) ist nicht mehr gegeben;
o Es können geringere Mengen bzw. Konzentrationen an tertiären Aminen in der Härterkomponente (B) verwendet werden, was die mechanischen Eigenschaften verbessert;
o Es ist eine vereinfachte Reaktionsführung der Verkappungsreaktion bei moderaten Temperaturen möglich (z.B. durch Zugabe eines Weichmachers zur Viskositätsminderung;
o Die Verwendung von unpolareren Weichmachern wie Dioctyladipat ist möglich; und
o Es ist die partielle Verwendung nachwachsender Rohstoffe (z.B. Cashewnussschalenöl) möglich.

### Beispiele und Methoden

### Bestimmung des Epoxidäquivalenzgewichtes des Epoxidharzes

Das Epoxidäquivalenzgewicht (EEW) des Epoxidharzes wird via Titration mit Perchlorsäure in Essigsäure gemäß DIN EN 1877-1 bestimmt.

### Bestimmung der dynamischen Viskosität

Dynamische Viskositäten werden mittels Anton Paar Rheometer Typ MCR 101 und einem rotierenden Kegel-Platte Aufbau bei 25°C gemäß EN ISO 3219 bestimmt.

### IR-Spektroskopie zur ReaktionsverFolgung

Zur Reaktionsverfolgung der Verkappungsreaktion (Herstellung verkappter PU-Präpolymere) werden mittels FT-IR Spektrometer Frontier von Bruker FT-IR-Spektren aufgenommen. Dabei wird die Abnahme der charakteristischen Isocyanatbande genutzt. Die genaue Lage der Isocyanatbande im IR-Spektrum kann von Verbindung zu Verbindung etwas variieren, liegt jedoch generell im Bereich bei ca. 2250 cm⁻¹. Ein Fachmann ist in der Lage die charakteristische Isocyanatbande im IR-Spektrum zu identifizieren.

### Bestimmung des Polymerisationsgrades n bzw. des Anteils der OH-Gruppen im Epoxidharz

Mittels HPLC/MS werden 3 µl Epoxidharz in einem geeigneten Lösungsmittel gelöst (z.B. Methanol oder *"saures" Acetonitril*"*,* siehe z.B. unten Laufmittel B), in einer Konzentration von ca. 4,5 mg/ml injiziert und mit geeigneter Trennmethode (siehe z.B. unten) analysiert. Die quantitative Beurteilung erfolgt bei 280 nm (+/- 16 nm) relativ mittels 100 % Methode. Hierbei wird von identischen Response-Faktoren der einzelnen Verbindungen ausgegangen. Die qualitative Peak-Zuordnung erfolgt einmalig über den Massendetektor und kann anschließend anhand der Retentionszeiten definiert werden. OH-funktionale Verbindungen sind hierbei das Epoxidharz mit einem Polymerisationsgrad n von 1 oder 2 und ggf. mehr. Der Anteil an OH kann anschließend über die Molmasse der jeweiligen Verbindungen berechnet werden.

Ein Fachmann ist in der Lage geeignete HPLC-Bedingungen auszuwählen. Beispielhafte HPLC-Bedingungen sind nachstehend veranschaulicht:

| | |
|---|---|
| Anlage: | Agilent 1100/1200 |
| Detektor: | Agilent 1260 DAD-HS-Detektor G7117C + Massendetektor MSD G6125B (Single Quat) |
| Säule: | Phenomenex Luna 5 µm Phenyl-Hexyl 100 A; 150 x 4,6 mm |
| Laufmittel A: | 5 mmol/L Ammoniumformiat-Puffer in HPLC-Wasser (500 ml H₂O + 8 ml Pufferlösung mit 2,5 mmol NH₄HCO₂ + 0,3 ml Ameisensäure) |
| Laufmittel B: | 5 mmol/L Ammoniumformiat-Puffer in Acetonitril (390 g Acetonitril + 8 ml H₂O + 8 ml Pufferlösung (enthält 2,5 mmol NH₄HCO₂) + 0,3 ml Ameisensäure) |
| Injektionsvolumen: | 3 µl |
| Fluss: | 1,0 ml/min |
| Säulentemp: | 40 °C |
| Post-Time: | 4 min |
| Gradient: | 0,00 min 2 % Laufmittel B |
| | 2,00 min 2 % Laufmittel B |
| | 17,00 min 90 % Laufmittel B |
| | 23,00 min 90 % Laufmittel B |
| | 23,01 min 2 % Laufmittel B |
| | 25,00 min 2 % Laufmittel B |
| Detektion: | UV 280 nm (+/- 16) |

### Ausführungsbeispiel und Vergleichsbeispiel

In den nachstehenden Ausführungs- und Vergleichsbeispielen wird als Verkappungsmittel jeweils styrolisiertes Phenol mit einer Hydroxylzahl von 241 mgKOH/g eingesetzt. Als PU-Präpolymer wird jeweils ein PU-Präpolymer mit einem NCO-Äquivalentgewicht von 1270 g/eq verwendet. Ferner wird Dioctyladipat (DOA) jeweils als Weichmacher verwendet. Das Epoxidharz ist ein Diglycidylether von Bisphenol A (DGEBA) mit einer dynamischen Viskosität bei 25°C von 14,3 Pas, einem Epoxidäquivalentgewicht von 184 g/eq und einem Anteil an Polymerisationsgrad n = 1 von 11,5 mol% und n = 2 von 1,4 mol%.

Als erster Schritt erfolgt die Verkappung des PU-Präpolymers. Erfindungsgemäß erfolgt dies sowohl mit OH-funktionellem Epoxidharz als auch styrolisiertem Phenol (siehe PU2 in der nachstehenden Tabelle 1). Im Vergleichsbeispiel PU1 erfolgt die Blockierung/Verkappung des PU-Präpolymers auf herkömmliche Weise lediglich mit Verkappungsmittel alleine.

**Tabelle 1: Verkappte PU-Präpolymerformulierungen (Anteile in Gew.-%)**

| | **PU1** | **PU2** |
|---|---|---|
| PU-Präpolymer | 71,9 | 64,5 |
| Epoxidharz | - | 19,9 |
| Verkappungsmittel | 17,7 | 7,9 |
| Katalysator | 0,25 | 0,26 |
| Stabilisator | 0,95 | - |
| Weichmacher | 9,2 | 7,5 |

Die in Tabelle 1 genannten Rohstoffe werden bei Raumtemperatur unter Rühren nacheinander in ein Gefäß vorgelegt. Die Reihenfolge der Zugaben ist hierbei frei wählbar, wobei lediglich der Katalysator für die Verkappungs-/Entkappungsreaktion zur Vermeidung unerwünscht starker Exothermie als Letztes zugegeben wird. Die Reaktionsmischung wird anschließend 18 Stunden ohne Temperaturzufuhr reagieren gelassen und dann mittels FT-IR-Spektroskopie auf Vollständigkeit überprüft. Beide Rezepturen wiesen einen minimalen Signalausschlag im FT-IR der Isocyanatbande im Bereich bei ca. 2250 cm⁻¹ auf, weshalb sie zusätzlich unter Temperaturzufuhr für eine Stunde bei 70°C abreagieren gelassen werden. In beiden PU-Präpolymeren weist das danach aufgenommene FT-IR-Spektrum kein Signal mehr bei der Isocyanatbande auf.

Unter Verwendung der vorstehend beschriebenen verkappten PU-Präpolymere PU1 und PU2 werden die Harzkomponenten (A) der Zweikomponenten-Beschichtungszusammensetzung hergestellt. Für das Ausführungsbeispiel gemäß der Erfindung KA2 wird in der nachstehenden Tabelle 2 (Zahlenangaben jeweils in Gew.-%) das PU-Präpolymer PU2 eingesetzt. Für das Vergleichsbeispiel KA1 wird das Präpolymer PU1 verwendet.

**Tabelle 2: Formulierung der Harzkomponente (A)**

| | **KA1** | **KA2** |
|---|---|---|
| PU1 | 47,4 | - |
| PU2 | - | 58,5 |
| Epoxidharz | 16,4 | 5,0 |
| Reaktivverdünner | 12,1 | 12,5 |
| Calciumcarbonat | 21,9 | 21,8 |
| Pigmente | 1,6 | 1,6 |
| Additive (Entlüfter) | 0,6 | 0,6 |

Die Massen der in Tabelle 2 angegebenen Flüssigkeiten werden zuerst in ein Gefäß vorgelegt und mittels Dissolver (Umfangsgeschwindigkeit ca. 3-4 m/s) vermischt bis eine homogene Mischung entsteht. Im Anschluss werden die Massen der Feststoffe zugegeben und ebenfalls mittels Dissolver (Umfangsgeschwindigkeit ca. 10 m/s) vermischt bis eine homogen verteilte Mischung entsteht.

Die wie vorstehend hergestellten Harzkomponenten KA1 und KA2 werden zur Herstellung von Beschichtungsformulierungen mit einer handelsüblichen Härterkomponente (B) kombiniert. In den vorliegenden Beispielen wird dafür der Aminhärter D.E.H.^{®} 4723 verwendet (nachstehend als KB bezeichnet). Die auf Raumtemperatur abgekühlten Komponenten KA1 bzw. KA2 werden vorgelegt, anschließend die Komponente KB zugegeben und mittels Dissolver (Umfangsgeschwindigkeit ca. 2-3 m/s) homogen vermischt. Nachdem eine homogene Mischung erhalten wurde, werden die Beschichtungsformulierungen sofort auf eine Kunststoffunterlage ausgegossen und die Flüssigfilme für 7 Tage bei Raumtemperatur belassen. Nach 7 Tagen werden aus den gehärteten Filmen Prüfkörper für die Zugprüfungen ausgestanzt. Die Zugeigenschaften der gehärteten Materialien werden mittels Prüfmaschine der Test GmbH, Modellreihe 112, auf Zugeigenschaften (Zugfestigkeit, Reißdehnung) getestet. Diese Tests werden gemäß DIN 53504 durchgeführt.

**Tabelle 3: Beispielhafte Beschichtungsformulierungen mit Zugeigenschaften**

| **Beschichtungsformulierung** | | **Gewichtsverhältnis** KA: KB | **Reißdehnung** [%] | **Zugfestigkeit** [N/mm²] | **Shore-A** |
|---|---|---|---|---|---|
| **KA** | **KB** | | | | |
| KA1 | KB | 100 : 24 | 170 | 5,7 | 78 |
| KA2 | | 100 : 25 | 205 | 7,1 | 81 |

Es kann erfindungsgemäß eine Verbesserung der mechanischen Eigenschaften, insbesondere eine deutliche Steigerung der Reißdehnung und der Zugfestigkeit, beobachtet werden.

## Patentansprüche

1. Zweikomponenten-Beschichtungszusammensetzung mit einer Harzkomponente (A), die als härtbaren Bestandteil mindestens ein härtbares Harz enthält, und einer Härterkomponente (B), die ein Härtungsmittel für das härtbare Harz der Harzkomponente (A) enthält, wobei
die Harzkomponente (A) mindestens ein Polyurethan-Präpolymer, mindestens ein Epoxidharz, das OH-Gruppen aufweist, und mindestens ein Verkappungsmittel enthält,
***dadurch gekennzeichnet, dass***
die NCO-Endstellen des Polyurethan-Präpolymers zum einen Teil an OH-Gruppen des Epoxidharzes und zum anderen Teil an das Verkappungsmittel gebunden sind, und ein weiterer Teil von Epoxidharz frei in der Harzkomponente (A) vorliegt.

2. Zweikomponenten-Beschichtungszusammensetzung gemäß Anspruch 1, wobei die Härterkomponente (B) ein Aminhärter-System umfasst.

3. Zweikomponenten-Beschichtungszusammensetzung gemäß Anspruch 1 oder 2, wobei die Harzkomponente (A) 25-70 Gew.-% an Polyurethan-Präpolymer, 2-40 Gew.-% an Epoxidharz und 1-20 Gew.-% an Verkappungsmittel umfasst, jeweils bezogen auf das Gesamtgewicht der Harzkomponente (A).

4. Zweikomponenten-Beschichtungszusammensetzung gemäß Anspruch 3, wobei die Harzkomponente (A) 30-65 Gew.-%, bevorzugt 35-60 Gew.-% an Polyurethan-Präpolymer, 4-35 Gew.-%, bevorzugt 6-30 Gew.-% an Epoxidharz, und 2-15 Gew.-%, bevorzugt 3-10 Gew.-% an Verkappungsmittel umfasst, jeweils bezogen auf das Gesamtgewicht der Harzkomponente (A).

5. Zweikomponenten-Beschichtungszusammensetzung gemäß Anspruch 4, wobei das Gewichtsverhältnis von Polyurethan-Präpolymer zu Epoxidharz ≥1, vorzugsweise >1,2 beträgt.

6. Zweikomponenten-Beschichtungszusammensetzung gemäß einem der Ansprüche 1-5, wobei das Epoxidharz, das OH-Gruppen aufweist, in der Harzkomponente (A) ein Diglycidylether von Bisphenol A ist.

7. Zweikomponenten-Beschichtungszusammensetzung gemäß Anspruch 6, wobei der Diglycidylether von Bisphenol A aufweist:
o eine Molekülkonzentration mit einem Polymerisationsgrad n=1 von 5 bis 15% und einem Polymerisationsgrad n≥2 von <3%, vorzugsweise eine Molekülkonzentration mit einem Polymerisationsgrad n=1 von 8 bis 13% und einem Polymerisationsgrad n≥2 von <2%;
und/oder
o ein Epoxidäquivalenzgewicht gemäß DIN EN 1877-1 von 160 bis 220 eq/g, vorzugsweise ein Epoxidäquivalenzgewicht von 170 bis 200 eq/g;
und/oder
o eine dynamische Viskosität bei 25°C nach EN ISO 3219 von 5 bis 20 Pas, vorzugsweise 8 bis 16 Pas.

8. Zweikomponenten-Beschichtungszusammensetzung gemäß einem der Ansprüche 1-7, wobei die Harzkomponente (A) als weiteren Bestandteil einen Katalysator, ein weiteres Epoxidharz, Reaktivverdünner, Weichmacher, Füllstoffe, Pigmente und/oder weitere Additive enthält.

9. Zweikomponenten-Beschichtungszusammensetzung gemäß Anspruch 8, wobei die Harzkomponente (A) 0-0,4 Gew.-% an Katalysator, 0-20 Gew.-% an Reaktivverdünner, 0-15 Gew.-% an Weichmacher, 0-40 Gew.-% an Füllstoffen, 0-4 Gew.-% an Pigmenten und/oder 0-5 Gew.-% an weiteren Additiven umfasst, jeweils bezogen auf das Gesamtgewicht der Harzkomponente (A).

10. Zweikomponenten-Beschichtungszusammensetzung gemäß Anspruch 9, wobei die Harzkomponente (A) 0,1-0,3 Gew.-% an Katalysator, 5-15 Gew.-% an Reaktivverdünner, 3-10 Gew.-% an Weichmacher, und/oder 10-35 Gew.-%, bevorzugt 15-25 Gew.-% an Füllstoffen umfasst, jeweils bezogen auf ds Gesamtgewicht der Harzkomponente (A).

11. Zweikomponenten-Beschichtungszusammensetzung gemäß einem der Ansprüche 1-10, wobei die Harzkomponente (A) und die Härterkomponente (B) in voneinander getrennten Behältnissen angeordnet sind, wobei das Gewichtsverhältnis des Gesamtgewichts der Harzkomponente (A) zu dem Gesamtgewicht der Härterkomponente (B) 100:10 bis 100:60 beträgt, vorzugsweise 100:15 bis 100:40.

12. Zweikomponenten-Beschichtungszusammensetzung gemäß einem der Ansprüche 1-11, wobei 10%-75% der NCO-Endstellen des Polyurethan-Präpolymers, basierend auf der Gesamtzahlen der NCO-Endstellen im Polyurethan-Präpolymer, an OH-Gruppen im Epoxidharz gebunden sind und der Rest der NCO-Endstellen des Polyurethan-Präpolymers an das Verkappungsmittel gebunden sind, und wobei vorzugsweise 20%-50% der NCO-Endstellen des Polyurethan-Präpolymers an OH-Gruppen im Epoxidharz gebunden sind und der Rest der NCO-Endstellen des Polyurethan-Präpolymers an das Verkappungsmittel gebunden sind.

13. Verwendung der Zweikomponenten-Beschichtungszusammensetzung nach einem der Ansprüche 1-12 als Bodenbeschichtung oder zur Betoninstandsetzung.

14. Verfahren zur Herstellung einer Harzkomponente (A) in der Zweikomponenten-Beschichtungszusammensetzung nach einem der Ansprüche 1-12, umfassend die Schritte:
(I) Vorlegen und Mischen des Polyurethan-Präpolymers, des Verkappungsmittels und zumindest eines Teils des Epoxidharzes, wobei das Epoxidharz OH-Gruppen aufweist, und anschließendes Umsetzen bis zum Verschwinden der Isocyanatbande im Bereich bei 2250 cm-' im IR-Spektrum, und
anschließend gegebenenfalls Zugeben weiterer Bestandteile;
oder
(II) Vorlegen und Mischen des Polyurethan-Präpolymers und des Verkappungsmittels, und anschließendes Umsetzen bis eine Veränderung der Isocyanatbande im IR-Spektrum im Bereich bei 2250 cm-' nicht mehr nachzuweisen ist,
anschließendes Zugeben des Epoxidharzes, wobei das Epoxidharz OH-Gruppen aufweist, und anschließendes Umsetzen bis zum Verschwinden der Isocyanatbande im Bereich bei 2250 cm-' im IR-Spektrum, und
gegebenenfalls anschließendes Zugeben weiterer Bestandteile;
oder
(III) Vorlegen und Mischen des Polyurethan-Präpolymers und eines Teils des Epoxidharzes, wobei das Epoxidharz OH-Gruppen aufweist, und anschließendes Umsetzen bis eine Veränderung der Isocyanatbande im IR-Spektrum im Bereich bei 2250 cm-' nicht mehr nachzuweisen ist,
anschließendes Zugeben des Verkappungsmittels, und Umsetzen bis zum Verschwinden der Isocyanatbande im Bereich bei 2250 cm-' im IR-Spektrum, und
anschließendes Zugeben des anderen Teils des Epoxidharzes und gegebenenfalls weiterer Bestandteile.
